# EUROPEAN PATENT SPECIFICATION

(11) **EP 1 858 700 B1**
(45) Date of publication and mention of the grant of the patent: **09.04.2014**
(21) Application number: 06849700.7
(22) Date of filing: 09.02.2006
(51) Int. Cl.: F41H 5/007, B32B 5/22, B32B 5/02, F16F 9/30, F41H 5/04

(54) **CONFORMABLE BALLISTIC RESITANT AND PROTECTIVE COMPOSITE MATERIALS COMPOSED OF SHEAR THICKENING FLUIDS REINFORCED BY FIBERS**
ANSCHMIEGBARE, BALLISTISCH SCHÜTZENDE VERBUNDWERKSTOFFE AUS SCHERVERDICKENDEN FLÜSSIGKEITEN VERSTÄRKT DURCH FASERSTOFFE
MATÉRIAUX COMPOSITES BALISTIQUES CONFORMES RÉSISTANTS ET PROTECTEURS CONSTITUÉS DE FLUIDES D'ÉPAISSISSEMENT PAR CISAILLEMENT RENFORCÉS PAR DES FIBRES

(30) Priority: 09.02.2005 US 651417 P
(43) Date of publication of application: 28.11.2007
(73) Proprietor: UD Technology Corporation, Newark, Delaware 19711 (US)
(72) Inventor: WETZEL, Eric, D., Baltimore, MD 21224 (US); WAGNER, Norman, Newark, DE 19711 (US)
(74) Representative: Mai, Dörr, Besier
(86) International application number: PCT/US2006/004581
(87) International publication number: WO 2007/100312

(56) References cited:
- EP-A1- 0 655 600
- WO-A1-2004/103231
- US-A- 3 649 426
- US-A- 4 568 392
- US-A- 5 854 143
- US-A1- 2002 171 067
- US-A1- 2004 171 321
- US-A1- 2004 173 422
- US-B2- 7 226 878

## Description

### Background of the Invention

A wide range of protective materials exist for preventing damage to sensitive goods or preventing injury to individuals. These protective materials include body armor, which prevents injuries due to ballistic or stab threats; packaging materials, which protect fragile or sensitive commercial goods from damage during handling and shipping, sporting equipment, such as elbow and knee pads, which prevent damage to skin and joints due to blunt trauma, and engineering foams, plastics and nanocomposites that are tough and energy absorbent materials for uses in automotive, aircraft, and wherever materials are exposed to impact, blunt trauma, puncture, knife, blast or other threats.

Shear thickening fluids (STFs) are flowable liquids containing particles whose viscosity increases with deformation rate. The STF remains flowable after impregnation into a material so as to not impede flexibility. In some cases, called discontinuous STFs, the viscosity increases dramatically over a very small increase in deformation rate. These materials offer the potential for flexible and conformable protective materials. At low deformation rates, during gentle handling and motion, the materials can deform. At high deformation rates, such as during an impact or damage event, the materials transition to more viscous, in some cases rigid, materials with the potential for increased protective properties. Previous studies (Y.S. Lee, E. D. Wetzel, and N. J. Wagner. "The ballistic impact characteristics of KEVLAR ®woven fabrics impregnated with a colloidal shear thickening fluid." J. Mat. Sci. 38 p.2825 - 2833. 2003 ("Lee et al. 2003") and R. G. Egres Jr., M. J. Decker, C. J. Halbach, Y. S. Lee, J. E. Kirkwood, K. M. Kirkwood, N. J. Wagner, and E. D. Wetzel. "Stab resistance of shear thickening fluid (STF)-KEVLAR® composites for body armor applications." Proceedings of the 24th Army Science Conference. Orlando, FL. Nov. 29 - Dec. 2, 2004 ("Egres et al., 2004") and WO 2004/103231 (Wagner and Wetzel) have shown that adding STFs to continuous, woven fabrics can greatly enhance the ballistic and stab resistance of these fabrics. Continuous, woven fabrics, however, have characteristics which are disadvantageous for some applications. These fabrics, especially in tight, plain woven form, are flexible, but not very conformable. This drawback makes it difficult to apply them to geometries of high curvature, or to applications such as helmets, knee and elbow pads, and shoes, as well as packaging materials, where flexibility and conformability are advantageous. A second drawback is that fabrics are typically stacked into planar forms, and are difficult to shape to more 3-dimensional geometries. For example, it would be difficult to use stacked fabrics to efficiently fill in the free volume surrounding a complex part packed into a square box. A third drawback is for the material to continuously conform to its targeted application, where motion, vibration, flexing, other mechanical deformations occur, but it is desired for the protective material to remain intimately in contact with the object, material, or person to be protected.

By conformable it is meant that the material is able to conform to objects that it is placed in contact with. For example, it can be molded around a material or poured or pressed into a container or mold. Further, a material that remains conformable during applications that might include vibrations or motion is desired.

Dilatancy is the increase of volume on deformation.

Shear thickening is the increase of viscosity with increase in shear rate. Shear thickening is different from dilatancy, although some shear thickening materials may show a tendency to dilate under suitable conditions.

Intercalation of the STF is the insertion of the STF between fibrils in the yarns or between yarns in the fabric. Another words, the STF can be intercalated (inserted between fibrils) in the yarn as well as intercalated (inserted between yarns) in the fabric.

STFs themselves can be used as a liquid, protective material without the use of continuous woven fabrics. The advantage of this approach is that, because the STF is flowable and deformable, it can fill complex volumes and accommodate bending and rotation. Furthermore, since the material is typically composed of sub-micron particles suspended in a continuous fluid, the STF maintains its properties down to micron-sized length scales. This property permits STF applicability even to very small length scale applications.

Here, however, we describe a novel application of STFs in compliant, deformable composites that greatly enhance the protective properties of STFs. STFs have excellent compression and shear material response, but poor inherent tensile strength. Therefore, to realize the maximum benefit of the STF response, the fluids are integrated into a flowable and deformable composite structure, which includes reinforcement by materials with high tensile strength and/or toughness. In addition, STFs are homogeneous on the lengthscale set by the size of the particles. Therefore, local deformation triggering the STF response is not rapidly propagated throughout the STF. Therefore, to realize the maximum benefit of the STF response, the fluids are further integrated into a flowable and deformable composite structure, which includes reinforcement by "stiff" materials, i.e., materials with high compression strength and high bending modulus. Finally, composites comprising STF integrated with both types of materials, i.e. high tensile strength as well as high compression strength and bending modulus provide significant performance enhancements to the STF response, while remaining a flowable, conformable material.

Patent WO 2440/012934 proposed a protective laminate structure comprising a layer of a shear thickening material sandwiched between flexible supports. The patent does not involve shear thickening fluids, however, as the shear thickening material is defined as a plastic or a material such as "Silly Putty^{®}".

The invention is an improvement over WO 2004/103231 according to the invention STF are integrated into a flowable and deformable composite structure. The same uses for the material of WO 2004/103231 would exist for this invention.
US 4,568,392 pertains to shear thickening fluids which comprise a water-swellable material (clay), present in a sufficient concentration so as to be capable of forming a stiff paste upon interaction with the water used, and water wherein the clay and water are kept separated by an intervening hydrocarbon-surfactant composition. The composition may include a fiberous material, such as fiberglass, asbestos, wood fiber, cellulose, shreaded paper, cotton seed hulls, sugar cane bagasse, peanut shells, shreaded old tires etc. These added materials are said to serve the purpose of imparting increased mechanical strength and rigidity to the paste.

### Summary of the Invention

The present invention relates to a composition as described in claim 1, materials comprising said composition as described in claims 6, 8, 22, 25-29, 31-35 and a process for making said composition as described in claim 30.

We have discovered that the protective properties of STFs can be greatly enhanced, while maintaining their conformability and flowabilty, by reinforcing STFs with inert filler material such as. The fibers could be chopped or of a finite length, or can be a short fiber preferably less than about 1 cm. The fibers are preferably not continuous or not fabric. The inert fillers are mixed in the STFs. The mixture of the STFs and fillers can be used directly, or within a composite structure. Examples of such a composite structure, can, but are not limited to, laminate structures, honeycomb structures, nonwoven or woven fabrics, foams, capsules, balloons or encapsulated structures.

One object of the invention is to have a composition which comprises mixture of a shear thickening fluid and at least one inert filler and said shear thickening fluid and filler remain in a flowable form.

Another object of the invention is to apply the inventive composition to laminate structures, honeycomb structures, nonwoven or woven fabrics, foams, capsules, balloons or encapsulated structures.

These novel blends containing STFs with various types of inert fillers are selected to impart specific properties to the resulting fluids provides a number of significant benefits to the composite material. For example, we believe that adding these fillers provides tensile strength to the STF, and allows more efficient load transfer throughout the material. However, if fillers or short fibers are used the deformability and flowability of the STF can be largely maintained. Additional benefits include increased stress transfer upon impact transmitted to the STF by the addition of high modulus, stiff short fibers. Such materials are anticipated to have significant benefits as compliant, processable, and flowable ballistic, puncture, stab, and shock resistant materials.

### BRIEF DESCRIPTION OF THE DRAWINGS

Figure 1 illustrates a schematic of the testing setup according to the invention.

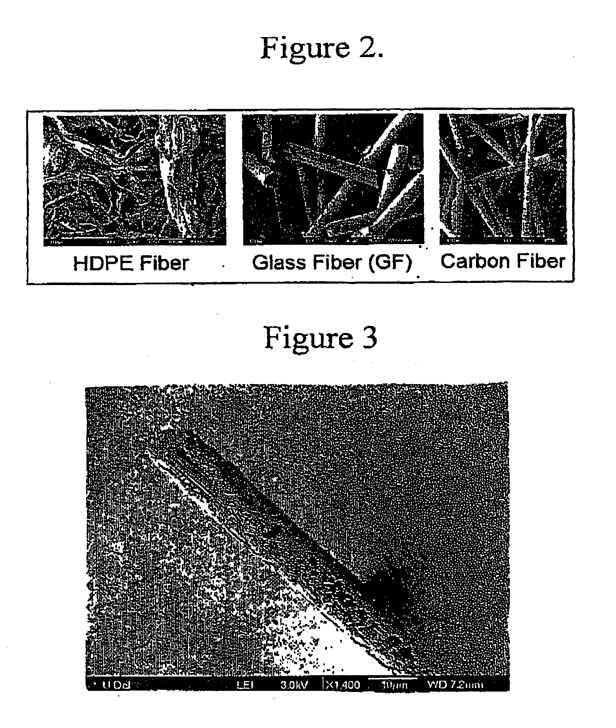

Figure 2 illustrates three different fibers mixed according to this invention.
Figure 3 illustrates Scanning Electron Microscopy ("SEM") of a carbon fiber mixed with the STF fluid.

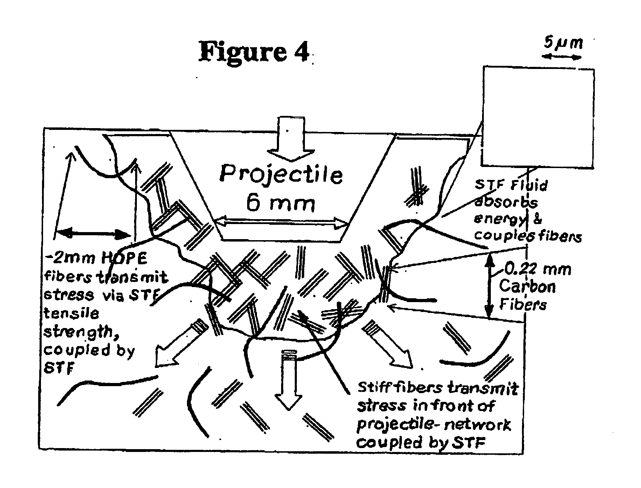

Figure 4 illustrates the role of the stiff fibers in transmitting stress in front of an impacting foreign object, "projectile", as well the role of the high tensile modulus fibers in transmitting stress laterally during extensional deformation of the filled STF during impact by the foreign object.

### DESCRIPTION OF THE INVENTION

The invention is related to a filler being mixed with a STF to form a mixture. The mixture is then used directly, applied to a material, or used within a material or composite material to form a composite. Examples of such materials the fiber reinforced STF composite can be applied to include:
Nonwoven or felted materials, fabrics, sheets of metal, plastics, or closed cell foams or open cell foams, composites, paper etc. Examples of materials and composite materials the filler (fiber)-reinforced STF can be used within include foams, porous composite structures, and laminates with pore structures of greater dimension than the fillers or particles used in making the STF.

The STF is any known STF and is the combination of the particles suspended in the suspending medium. STF are described in WO2004/103231 (Wagner and Wetzel) and US 2005/0266748 (Wagner and Wetzel).

The particles used can be made of various materials, such as, but not limited to, SiO₂ or other oxides, gold, silver or other metals, calcium carbonate, or polymers, such as polystyrene or polymethylmethacrylate, or other polymers from emulsion polymerization. The particles can be stabilized in solution or dispersed by charge, Brownian motion, adsorbed surfactants, and adsorbed or grafted polymers, polyelectrolytes, polyampholytes, or oligomers, and nanoparticles. Particle shapes include spherical particles, elliptical, biaxial, rhombohedral, cubic, and rod-like particles, or disk-like or clay particles. The particles may be synthetic and/or naturally occurring minerals. Also, the particles can be monodisperse, bidisperse or polydisperse in size and shape. Mixtures of the above particles can also be used.

Any particle that has a size less than the filler size, which is about 1 mm, can be used. Preferably the particles should have a size less than the diameter of the filler, which is typically 100 microns or less, so that the STF can be mixed with the fillers with intimate contact.

The suspending media that are used for the STF can be aqueous in nature (i.e., water with or without added salts, such as sodium chloride, and buffers to control pH) for electrostatically stabilized or polymer stabilized particles, or organic (such as ethylene glycol, polyethylene glycol, ethanol), or silicon based (such as silicon oils, phenyltrimethicone). Hydrocarbon and fluorocarbon suspending media can also be used. The suspending media can also be composed of compatible mixtures of solvents, and may contain free surfactants, polymers, and oligomers and nanoparticles. The suspending media should be environmentally stable so that they remain integral to the filler and suspended particles during service. The suspending media should not adversely affect the filler material or the materials to which, or within which the STF is to be used.

The particles are suspended in the suspending medium and should produce a fluid that has the shear thickening property. Shear thickening does not require a dilatant response, i.e., it need not be associated with an increase in volume such as often observed in dry powders or sometimes in suspensions of larger particles (greater than 100 microns). The fluid may be diluted with a second solvent to enable mixing with the filler, and then reconcentrated through evaporation of the second solvent after impregnation or intercalation, as long as the remaining particles and suspending medium remains flowable with shear thickening properties.

The inert filler material according to this invention include but are not limited to fibers such as but not limited to glass, polyolefins, aramid, carbon, ceramic whiskers, asbestos, nylons, polyesters, natural products, such as but not limited to hemps, cotton, microcrystalline cellulose, NOMEX^{®} from DuPont.

According to the invention, the composition contains at least one inert filler. The term "filler" means any particle that is solid, viscoelastic, rubbery, elastic or gel-like at room temperature and atmospheric pressure, used alone or in combination, which does not react adversely with the various ingredients of the composition to negate the shear thickening response of the STF.

The inert filler may or may not be absorbent, i.e., capable in particular of absorbing the liquids of the composition and also the biological substances secreted by the skin. The absorbent fillers often have the property of making the deposit of composition on the keratin materials matte, which is particularly desired for a foundation and a concealer product.

In one embodiment, the at least one inert filler may have an apparent diameter ranging from about 0.001 µm to about 150 µm, preferably from about 0.5 µm to 120 µm, and more preferably from about 1 µm to about 80 µm. An apparent diameter corresponds to the diameter of the circle into which the elementary particle fits along its shortest dimension (thickness for leaflets).

The at least one inert filler is present in the inventive composition in an amount ranging from about 0.01 wt% % to about 50wt % or greater relative to the weight of the total composition. The preferred composition has between 0.1 wt% and 10 wt% of filler.

In an illustrative embodiment not forming part of the invention, the at least one inert filler may be mineral or organic, and lamellar, spherical or oblong. The at least one inert filler may be chosen from talc, mica, silica, kaolin, polyamide powders such as NYLON® from DuPont, (ORGASOL® from Atochem) powder, poly β-alanine powder, polyethylene powder, acrylic polymer powder and in particular polymethyl methacrylate (PMMA) powder, for instance the product sold or made by Wacker under the reference Covabead LH-85 (particle size 10-12 µm) or acrylic acid copolymer powder (POLYTRAP® from Dow Coming), polytetrafluoroethylene (TEFLON® from DuPont) powders, lauroyllysine, boron nitride, starch, hollow polymer microspheres such as those of polyvinylidene chloride/acrylonitrile, for instance EXPANCEL® (novel Industrie), hollow polymer microspheres (TOSPEARI® from Toshiba, for example), precipitated calcium carbonate, magnesium carbonate and hydrocarbonate, hydroxyapatite, hollow silica microspheres (SILICA BEADS® from Maprecos), glass or ceramic microcapsules and polyester particles. The at least one inert filler may be surface-treated, e.g., to make them lipophilic.

Examples of suitable polymers useful in the practise of the present invention include without limitation polyamides, including KEVLAR®, polyolefins, including polypropylene, polyethylene (low density polyethylene (LDPE), very low density polyethylene (ULDPE), which has been referred to as ultra low density polyethylene, linear low density polyethylene (LLDPE), linear low density polyethylene (LLPE), etc. very low density polyethylene (VLDPE), high density polyethylene (HDPE), etc.), polybutene, and polymethyl pentene (PMP), polyamides, including nylon 6, polyesters, including polyethylene terephthalate, polyethylene naphthalate, polytrimethylene terephthalate, poly(1,4-cyclohexylene dimethylene terephthalate) (PCT), and aliphatic polyesters such as polylactic acid (PLA), polyphenylene sulfide, thermoplastic elastomers, polyacrylonitrile, acetals, fluoropolymers, co- and ter-polymers thereof and mixtures thereof. As noted above, the fibers of the invention can also include other conventional polymers, such as those listed above, but without the exfoliated platelet particles. '

At least one inert filler used may contain groups capable of forming hydrogen bonds, like these structuring polymers. As fillers capable of forming hydrogen bonds, mention may be made of fillers or particles of acrylic polymer such as PMMA for instance the product sold by Wacker under the reference Covabead LH-85 (particle size 10-12 µm) and POLYTRAP® sold or made by Dow Coming, hydrophobic-treated silica, polyamide (NYLON®) powders (ORGASOL® from Atochem), and mixtures thereof. For units of the ester type, the fillers used may be of the polyester type.

The surface of the silica used for the STF or the filler may be chemically modified, by hydrophobic chemical treatments, giving rise to a decrease in the number of silanol groups. The hydrophobic groups may be:

trimethylsiloxyl groups, which are obtained, for example, by treating fumed silica in the presence of hexamethyldisilazane. Silicas thus treated are known as "silica silylate" according to the CTFA (6th edition, 1995). They are sold, or made for example, under the references "AEROSIL R812®" by the company Degussa and "CAB-O-SIL TS-530®" by the company Cabot;

dimethylsilyloxyl or polydimethylsiloxane groups, which are obtained, for example, by treating fumed silica in the presence of polydimethylsiloxane or dimethyldichlorosilane. Silicas thus treated are known as "silica dimethyl silylate" according to the CTFA (6th edition, 1995). They are made or sold, for example, under the references "AEROSIL R972®" and "AEROSIL R974®" by the company Degussa, and "CAB-O-SIL TS-610®" and "CAB-O-SIL TS-720®" by the company Cabot;

groups derived from reacting fumed silica with silane alkoxides or siloxanes. These treated silicas are, for example, the products made or sold under the reference "AEROSIL R805®" by the company Degussa.

In an illustrative embodiment not forming part of the invention, waxes and rubber particles can also be used as the inert filler. The waxes are those generally used in cosmetics and dermatology; they are, for instance, chosen from waxes of natural origin, such as beeswax, carnauba wax, candelilla wax, ouricury wax, Japan wax, cork fibre wax, sugar cane wax, paraffin wax, lignite wax, microcrystalline waxes, lanolin wax, montan wax, ozokerites and hydrogenated oils such as hydrogenated jojoba oil, as well as waxes of synthetic origin, for instance polyethylene waxes derived from the polymerization or copolymerization of ethylene, waxes obtained by Fischer-Tropsch synthesis, fatty acid esters and glycerides that are solid at 40° C., for example at above 55° C., silicone waxes such as alkyl- and alkoxy-poly(di)methylsiloxanes and/or poly(di)methylsiloxane esters that are solid at 40° C., for example at above 55° C.

In an illustrative embodiment not forming part of the invention, effect pigments and metal effect pigments can also be used as the inert filler. Effect pigments used are pigments based on platelet-shaped, transparent or semi-transparent substrates comprising, for example, sheet silicates, such as mica, synthetic mica, platelet-shaped iron oxide, SiO₂ flakes, TiO₂ flakes, graphite flakes, Fe₂O₃ flakes, Al₂O₃ flakes, glass flakes, holographic pigments, talc, sericite, kaolin, or other silicatic materials coated with rare earth metal sulfides such as, e.g., Ce₂S₃, colored or colorless metal oxides, e.g. TiO₂, titanium suboxides, titanium oxynitrides, Fe₂O₃, Fe₃O₄, SnO₂, Cr₂O₃, ZnO, CuO, NiO, and other metal oxides, alone or in a mixture in one uniform layer or in successive layers (multilayer pigments). The multilayer pigments are known, for example, from the German unexamined laid-open specifications DE 197 46 067, DE 197 07 805, DE 19 07 806 and DE 196 38 708. Pearl lustre pigments based on mica flakes are known, for example, from the German patents and patent applications 14 67 468, 19 59 998, 20 09 566, 22 14 454, 22 15 191, 22 44 298, 23 13 331, 25 22 572, 31 37 808, 31 37 809, 31 51 343, 31 51 354, 31 51 355, 32 11 602, 32 35 017 and P 38 42 330 and are obtainable commercially, e.g. under the brand names MINATEC® and IRIODIN® from Merck KGaA, Darmstadt, FRG. Particularly preferred pigment preparations comprise TiO₂/mica, Fe₂0_{O} mica and/or TiO₂/Fe₂O₃ mica pigments. The SiO₂ flakes can be coated, for example, as described in WO 93/08237 (wet-chemical coating) or DE-A 196 14 637 (CVD process). Al₂O₃ flakes are known, for example, from EP 0 763 573 A1. Platelet-shaped substrates coated with one or more rare earth metal sulfides are disclosed, for example, in DE-A 198 10 317.

Examples of usable inorganic powders include titanium dioxide, zirconium oxide, zinc oxide, cerium oxide, magnesium oxide, barium sulfate, calcium sulfate, magnesium sulfate, calcium carbonate, magnesium carbonate, talc, mica, kaolin, muscovite, synthetic mica, ruby mica, biotite, lipidolite, silicic acid, silicic acid anhydride, aluminum silicate, magnesium silicate, aluminum magnesium silicate, calcium silicate, barium silicate, strontium silicate, metal salts of tungstic acid, vermiculite, bentonite, montmorillonite, hectorite, zeolite, ceramics powder, calcium secondary phosphate, alumina, aluminum hydroxide, boron nitride and silica.

Examples of usable organic powders include resin powders, such as polyamide powder, polyester powder, polyethylene powder, polypropylene powder, polystyrene powder, polyurethane powder, benzoguanamine powder, polymethyl benzoguanamine powder, poly(tetrafluoroethylene) powder, polymethyl methacrylate powder, cellulose powder, silk powder, nylon powder (e.g., 12-nylon powder or 6-nylon powder), silicone elastomer powder, styrene-acrylic acid copolymer powder, divinylbenzene-styrene copolymer powder, vinyl resin powder, urea resin powder, phenol resin powder, fluororesin powder, silicone resin powder, acrylic resin powder, melamine resin powder, epoxy resin powder and polycarbonate resin powder; microcrystalline fiber powder; starch powder; and lauroyl lysine powder. According to this invention, powders having a silicone resin or silicone elastomer as their skeleton, and powders comprising a -[Si-O]ₙ repeating unit in their molecular skeleton, are particularly preferred. In this case, part of the molecule may contain a -Si-(CH₂CH₂)ₘ-Si- bond.

Examples of usable surfactant metal salt powders (metal soap powders) include powders of zinc stearate, aluminum stearate, calcium stearate, magnesium stearate, zinc myristate, magnesium myristate, zinc cetylphosphate, calcium cetylphosphate and zinc sodium cetylphosphate.

Examples of usable colored pigments include inorganic red pigments, such as iron oxide, iron hydroxide and iron titanate; inorganic brown pigments, such as γ-iron oxide; inorganic yellow pigments, such as iron oxide yellow and loess; inorganic black pigments, such as iron oxide black and carbon black; inorganic violet pigments, such as manganese violet and cobalt violet; inorganic green pigments, such as chromium hydroxide, chromium oxide, cobalt oxide and cobalt titanate; inorganic blue pigments, such as Prussian blue and ultramarine blue; lakes of tar pigments; lakes of natural dyes; and synthetic resin powder complexes of the inorganic pigments as recited above.

Examples of usable pearl pigments include titanium dioxide-coated mica, bismuth oxychloride, titanium dioxide-coated bismuth oxychloride, titanium dioxide-coated talc, fish scales, and titanium dioxide-coated colored mica; and examples of a usable metallic powder pigment include aluminum powder, copper powder and stainless powder.

Examples of tar pigments include Red No. 3, Red No. 104, Red No. 106, Red No. 201, Red No. 202, Red No. 204, Red No. 205, Red No. 220, Red No. 226, Red No. 227, Red No. 228, Red No. 230, Red No. 401, Red No. 505, Yellow No. 4, Yellow No. 5, Yellow No. 202, Yellow No. 203, Yellow No. 204, Yellow No. 401, Blue No. 1, Blue No. 2, Blue No. 201, Blue No. 404, Green No. 3, Green No. 201, Green No. 204, Green No. 205, Orange No. 201, Orange No. 203, Orange No. 204, Orange No. 206 and Orange No. 207); and the natural pigments described above include powders of carminic acid, laccaic acid, carthamin, bradilin and crocin.

It can be preferable to mix at least two fillers together. One filler can have better compression strength, such as but not limited to a fiber and the other filler can have better tensile strength properties such as but not limited to a polyolefin. The preferred tensile strength of the fibers is from 0.1 GPa to 10 GPa.

### Examples

### Materials and testing

STFs were prepared by dispersing 450 nm silica particles in a polyethylene glycol (PEG) carrier fluid, at a volume fraction of 52%. Various types of short fibers, at various volume fractions, were added to the STF and mixed by hand, then rolled overnight to achieve uniform dispersion.

The inert fillers used for these experiments were: (i) milled glass fibers (GF) (Fiberglast Developments Corp.; Brookville, OH), with a typical length of 790 µm and an aspect ratio of ∼55; (ii) chopped PAN carbon fibers (CF) (Textron Aucarb Fiber Type 401, no longer in production), with a typical length of 220 µm and an aspect ratio of ∼30; (iii) surface-modified high density polyethylene (HDPE) (Fluoro-Seal Corp. Inhance Group; Houston, TX), with a length of 1.8-2.3 mm and an aspect ratio of ∼64; and (iv) surface-modified KEVLAR^{®} aramid pulp (KP) (Fluoro-Seal Corp. Inhance Group; Houston, TX), with a typical length of 760 µm and an aspect ratio of ∼100. The GF and CF fibers are rigid, straight, relatively brittle fibers. The HDPE and KP fibers are flexible and tough, and are likely to entangle.

Experiments were performed on neat PEG; neat STF; PEG with various additions of the four fiber types; and STF with various additions of the four fiber types. Table 1 shows the range of material combinations tested. Typically, adding moderate amounts of the HDPE and KP fibers results in significant increases in system viscosity. Therefore, in all cases, HDPE and KP are added at only 1 % vol. The rigid CF and GF fibers can be added at higher loadings without dramatically decreasing flowability, so additions of 5%, 10%, and 20% vol were used.

**Table 1: Target descriptions and ballistic results. Acronyms are defined in the text above.**

| **Target** | **Description** | **Target mass (g)** | **Velocity (m/s)** | **Penetration depth (cm)** |
|---|---|---|---|---|
| A | Empy (no fluid) | 0 | 244.3 | 4.90 |
| B | PEG | 16.40 | 245.4 | 3.71 |
| C | PEG-1% HDPE/20% CF | 17.67 | 243.9 | 3.61 |
| D | STF | 21.15 | 244.5 | 2.85 |
| E | STF-1% HDPE | 22.36 | 246.7 | 2.79 |
| F | STF-1% KP | 23.70 | 246.5 | 2.60 |
| G | STF - 5% GF | 21.57 | 247.0 | 2.79 |
| H | STF-10% GF | 25.86 | 243.4 | 2.37 |
| I | STF-20% GF | 25.12 | 236.7 | 2.13 |
| J | STF - 5% CF | 21.62 | 246.9 | 2.70 |
| K | STF-10% CF | 22.07 | 246.9 | 2.35 |
| L | STF-20% CF | 25.07 | 247.1 | 1.82 |
| M | STF-1% HDPE/5% GF | 24.96 | 242.4 | 2.53 |
| N | STF - 1% HDPE/ 20% GF | 26.21 | 243.6 | 2.20 |
| O | STF-1% HDPE/5% CF | 26.31 | 247.1 | 2.23 |
| P | STF-1% HDPE/20% CF | 28.67 | 245.0 | 0.52 |
| Q | STF-1% KP/5% CF | 26.17 | 243.3 | 2.10 |
| R | STF - 1 % KP/20% CF | 27.34 | 244.3 | 0.44 |

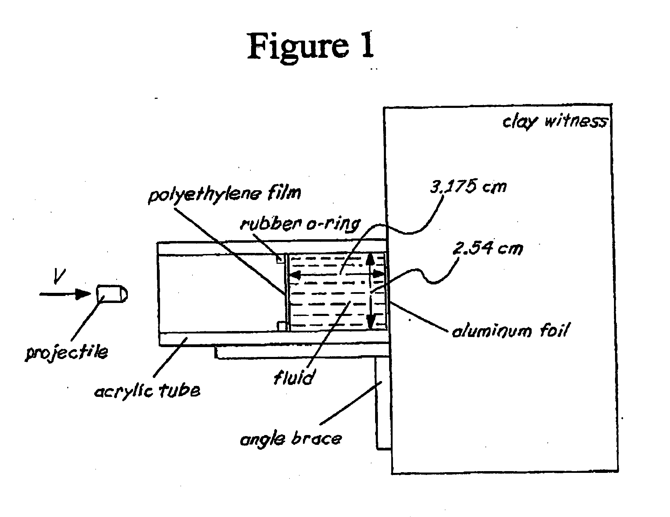

Ballistic testing was performed using a helium pressurized gas gun and 0.22 caliber, 17 grain fragment simulating projectiles (FSPs). Velocities were measured prior to impact using a set of light screens and a chronograph, and were maintained near 244 m/s. Fluid samples were poured into acrylic tubes with a 2.54-cm inner diameter, to a total material depth of 3.175 cm. The rear of the tubes were sealed with adhesive-backed aluminum foil, while the fronts of the fluid charge were sealed using a rubber o-ring and a thin piece of polyethylene film. These tubes were placed directly onto a block of Van Aken (Rancho Cucamonga, CA) modeling clay, as shown in Figure 1. After projectile impact, the depth of penetration of the projectile into the clay was measured and reported. Less impact depth in the clay indicates that the target absorbed more projectile energy.

### Results

Table 1 shows the measured depths of penetration as a function of material type. First note that, with no fluid in the testing tube (target A), the clay is penetrated by the projectile to a depth of 4.90 cm. Placing PEG in the tube (target B) decreases the penetration depth slightly to 3.71 cm. Adding fibers to the PEG (target C) has little effect on penetration depth. Neat STF, with no added fibers (target D), provides better protection than the PEG target, with a total penetration of 2.85 cm.

Targets E and F show that small additions of HDPE or KP fibers to the STF has little effect on penetration depth.

Targets G, H, and I show that, as more GF is added to the STF, the penetration depth decreases systematically. Similarly, targets J, K, and L show that, as more CF is added to the STF, penetration depth decreases. However, the performance of the STF with CF is measurable better than that of the STF with GF, with a total penetration depth for 20% GF addition of 2.13 cm compared with a depth of 1.82 cm for 20% CF addition.

Targets M and N show that adding small amounts have HDPE to the STF-GF mixtures causes a slight decrease in penetration depth.

Target O shows that, similar to target M, adding a small amount of HDPE to an STF with 5% CF causes a slight decrease in penetration depth. However, target P, with 20% CF and 1% HDPE, shows a remarkable decrease in penetration depth to 0.52 cm, compared to target L with 20% CF and no HDPE, which had a penetration depth of 1.82 cm. These results show that, for the case of high CF loading, a small amount of additional HDPE can cause a dramatic improvement in protective properties.

Similarly, target Q shows that adding a small amount of KP does not greatly improve the properties of an STF with 5% STF. However, target R shows that adding a small amount of KP to an STF with 20% CF can dramatically improve the penetration resistance, demonstrating 0.44 cm penetration depth versus 1.82 cm penetration depth for STF with 20%CF addition only (target L).

### Discussion and Summary

Comparing the penetration depth of conventional STF (target D, 2.85 cm) to the best short fiber-reinforced STF (target R, 0.44 cm) shows that adding short fibers to STFs can greatly improve their penetration resistance. The efficacy of this material is more dramatic when compared to a conventional liquid (target B, 3.71 cm) or no protection (target A, 4.90 cm). The fact that all of the targets remain conformable and flowable demonstrates the remarkable nature of this discovery. We have created materials which remain very flexible and deformable, are capable of filling complex or small spaces, and still provide significant protective properties.

The results also suggest that the details of the short fiber selection could be important. It appears that carbon fibers work better than glass fibers, with the addition of small amounts of a flexible fiber such as a high density polyethylene or aramid fiber further enhancing the protective properties. It is also important to note that adding short fibers to PEG resulted in little improvement in protective properties, suggesting that short fiber reinforcement is only effective for shear thickening fluids.

### Extensions of the technology

It is obvious that these principles of STF enhancement could carry over to any other chopped fiber addition, such as nylon, PBO, polypropylene, or natural fibers. Nanofiber reinforcement, such as by carbon nanotubes or silica nanofibers, could also provide this effect. Other particulate fillers, such as platelike particles including mica or natural clay additives, could also demonstrate comparable effects.

Also note that we intend STFs to include a wide range of materials whose resistance to deformation increases with deformation rate. For example, the STF material could be deformable and compliant, but not pourable. This material would still exhibit the desirable transition in mechanical properties, but with a less fluid-like state at low deformation rates. This behavior could be exhibited, for example, in STFs with very high fiber loadings, or STFs which have been gelled or lightly crosslinked.

The applications of this technology could include, but are not limited to: a pourable, protective barrier, which is poured around components to prepare them for shipping; a pouch of a fiber-reinforced STF used as a conformable elbow pad; or a protective vest composed of a permeable material, such as a spun-bound fabric or open cell foam, soaked with fiber-reinforced STF. In addition, these fluids may find use as layers between panels or materials of similar or material properties that are designed to absorb energy at moderate to high impacts or dampen vibrations or shock waves. These fluids may also find application as impact and puncture property modifiers as immiscible blends with plastics, polymers, or in solid composite structures.

The STF mixture with the inert filler can be used in an airbag material to make an air bag. The airbag technology is well known in the art (See for example U.S. Patent 5,639,118).

It was also well know that an airbag is folded and can be made from a KEVLAR^{®} material. For example, see for example U.S. Patent No. 4,508,294.

The inventive composition can also be used for advanced body armor as described in WO2004/103231 (Wagner and Wetzel) and US 2005/0266748 (Wagner and Wetzel). If the material is fibers or yarns, the fibers or yarns can be intercalated with the inventive composition (STF mixed with the inert fiber) as described in either Wagner and Wetzel above.

The inventive composition can also be used for protective material, such as for engines and turbines or anywhere that there is a desire to dissipate the kinetic energy of a moving object. The material can also be used for bomb blankets, tank skirts, stowable vehicle armor, inflatable protective devices, tents, seats or cockpits, storage and transport of luggage, storage and transport of munitions, and sporting goods or protective sports apparel. The material can be used to fashion protective apparel or clothing, such as jackets, gloves, motorcycle protective clothing, including jackets and hunting gaitors, chaps, pants, boots, which could stiffen to provide bodily protection against blasts, such as those caused by exploding land mines, and sudden impacts, such as those incurred upon landing by parachute, or in accidents. The material would have stab resistance properties and can be used to provide bodily protection against sharp instruments, such as knives, picks, or swords used in hand-to-hand combat. The material also can be incorporated inside a helmet to protect the head, such as motorcycle helmets, bicycle helmets, athletic helmets (football, lacrosse, ice-hockey etc). The material can also be used for industrial safety clothing for protecting workers in environments where sharp objects or projectiles could be encountered. The material can also be used for covering industrial equipment, such as equipment with high-speed rotating components, which could generate and release projectiles upon catastrophic equipment failure. The material can also be used as shrouding over aircraft engines, to protect the aircraft and its occupants upon catastrophic failure of the engine. The material can also be used as a spall liner for vehicles such as automobiles, aircraft, and boats, to protect the vehicle occupants by containing projectiles generated by a blunt or ballistic impact on the outside of the vehicle. The material could also be used for puncture-resistant protective clothing for fencing participants.
Fibre optic and electromechanical cables,
Friction linings (such as clutch plates and brake pads),
Gaskets for high temperature and pressure applications,
Adhesives and sealants,
Flame-resistant clothing,
composites,
asbestos replacement,
hot air filtration fabrics,
mechanical rubber goods reinforcement,
ropes and cables and
sail cloth
Tires and pneumatic liners

Micrometeorite and orbita debris shielding for spacecraft and astronauts.

## Claims

1. A composition which comprises a mixture of a shear thickening fluid, whose viscosity increases with deformation rate and comprises particles suspended in a suspending medium in form of a flowable liquid and at least one inert filler,
wherein said composition remains in a conformable form and is able to conform to objects that it is placed in contact with,
wherein the at least one inert filler is present in the composition in an amount ranging from 0.01 wt% to 50wt%,
wherein said inert filler is a polyolefin fiber, aramid fiber, carbon fiber, ceramic whisker fiber, nylon fiber, or a polyester fiber.

2. The composition as claimed in claim 1, wherein said filler is an aramid fiber, graphite fiber, nylon fiber.

3. The composition as claimed in claim 1, wherein said shear thickening fluid contains particles suspended in a suspending medium and said particles are oxides, calcium carbonate, synthetically occurring minerals, naturally occurring minerals, polymers or a mixture thereof.

4. The composition as claimed in claim 3, wherein said suspending medium is water, which optionally contains added salts, surfactants, nanoparticles or polymers or mixtures thereof.

5. The composition as claimed in claim 3, wherein said suspending medium is ethylene glycol, polyethylene glycol, ethanol, silicon oils, hydrocarbons, fluorinated solvents, phenyltrimethicone or a mixture thereof.

6. A material for dissipating the kinetic energy of a moving object comprising the composition as claimed in claim 1 being applied to a material.

7. The material as claimed in claim 6 wherein the material is a laminate structure, honeycomb structure, nonwoven fabric, a foam, a capsule, a balloon or an encapsulated structure.

8. A material for dissipating the kinetic energy of a moving object comprising a non woven material which is impregnated or intercalated with in the composition as claimed in claim 1 wherein the composition remains in a flowable form after impregnation or intercalation.

9. The material as claimed in claim 8, wherein said shear thickening fluid contain particles suspended in a suspending medium and said particles are oxides, calcium carbonate, synthetically occurring minerals, naturally occurring minerals, polymers or a mixture thereof.

10. The material as claimed in claim 9, wherein said suspending medium is water, which optionally contains added salts, surfactants, and/or polymers.

11. The material as claimed in claim 9, wherein said shear thickening fluid contain particles suspended in a suspending medium and said particles are oxides, calcium carbonate, synthetically occurring minerals, naturally occurring minerals, polymers or a mixture thereof.

12. The material as claimed in claim 11, wherein said suspending medium is ethylene glycol, polyethylene glycol, ethanol, silicon oils, phenyltrimethicone or a mixture thereof and said material is a poly (para- phenylene terephthalamide).

13. The material as claimed in claim 12, wherein said particles are oxides, calcium carbonate, synthetically occurring minerals, naturally occurring minerals, or polymers or a mixture thereof.

14. The material as claimed in claim 13, wherein said particles are SiO₂, polystyrene or polymethylmethacrylate.

15. The material as claimed in claim 11, wherein said suspending medium is ethylene glycol, polyethylene glycol, ethanol, a silicon oil or phenyltrimethicone or mixtures thereof.

16. The material as claimed in claim 15, wherein said particles have an average diameter size of less than 1 mm.

17. The material as claimed in claim 15, wherein said particles have an average diameter size of less than 100 microns.

18. The material according to claim 11, wherein the material comprises one or more layers of said material and said at one or more layers are a woven fabric.

19. The material according to claim 11, wherein the material comprises one or more layers of said material and said at one or more layers are a nonwoven fabric.

20. The material according to claim 11, wherein the material comprises one or more layers of said material and said at one or more layers are a knitted fabric.

21. The material according to claim 11, wherein at least a portion of said polymer fibers are formed of poly (para-phenylene terephthalamide).

22. A protective barrier of fiber material comprising a material having a plurality of high tenacity polymer fibers formed into a fabric structure wherein at least a portion of said fibers is intercalated with the composition as claimed in claim 1 wherein the shear thickening fluid remain in a flowable form after intercalation.

23. The protective barrier according to claim 22, wherein at least a portion of said polymer fibers are formed of poly (para-phenylene terephthalamide).

24. The protective barrier as claimed in claim 23, wherein the protective barrier is stowable vehicle armor, tents, seats, cockpits, spall liner, used in storage and transport of luggage, used in storage and transport of munitions.

25. Body armor comprising the material as claimed in claim 6.

26. An airbag comprising the material as claimed in claim 6.

27. A bomb blanket comprising the material as claimed in claim 6.

28. Protective clothing for protection from fragmentation during activities as bomb defusing and demining comprising the material as claimed in claim 9.

29. A tank skirt comprising the material as claimed in claim 6.

30. A process for making the composition as claimed in claim 1, which comprises suspending particles in a suspending medium to form a shear thickening fluid and mixing an inert filler in said shear thickening fluid,
wherein the at least one inert filler is present in the composition in an amount ranging from 0.01 wt% to 50wt%,
wherein said inert filler is a polyolefin fiber, aramid fiber, carbon fiber, ceramic whisker fiber, nylon fiber, or a polyester fiber.

31. A tire comprising the material as claimed in claim 6.

32. Industrial protective clothing comprising the material as claimed in claim 6.

33. Industrial protective materials and/or liners for containing equipment or processes that may produce fragmentation or projectiles, comprising the material as claimed in claim 6.

34. Protective clothing and equipment for sports and leisure activities comprising the material as claimed in claim 6.

35. The material as claimed in claim 6, wherein the material is used in belts and
hosing for industrial and automotive applications,
Fibre optic and electromechanical cables,
Friction linings (such as clutch plates and brake pads),
Gaskets for high temperature and pressure applications,
Adhesives and sealants,
Flame-resistant clothing,
composites,
asbestos replacement,
hot air filtration fabrics,
mechanical rubber goods reinforcement,
ropes and cables
inside helmets
fencing clothing
motorcycle protective clothing
boots,
gaitors,
chaps,
pants
gloves or
sail cloth.

36. The material as claimed in claim 8, wherein said said inert filler is a high compression strength fiber.

37. The material as claimed in claim 8, wherein said said inert filler is a high tensile strength fiber.

38. The material as claimed in claim 37 which further comprises a high compression strength fiber mixed in the shear thickening fluid.

39. The material as claimed in any of claims 6, 8, 22, 25-29, and 31-34 wherein said material remains in a pourable form during application.

## Patentansprüche

1. Zusammensetzung, umfassend eine Mischung eines scherverdickenden Fluids, deren Viskosität mit der Deformationsrate größer wird, und umfassend Partikel, die in einem Suspensionsmedium in Form einer fließfähigen Flüssigkeit und mindestens eines inerten Füllstoffs suspendiert sind,
wobei die Zusammensetzung eine anpassbare Form beibehält und sich an Gegenstände anpassen kann, mit denen sie in Kontakt gebracht wird, wobei der mindestens eine inerte Füllstoff in der Zusammensetzung in einer Menge im Bereich von 0,01 Gew.-% bis 50 Gew.-% vorhanden ist,
wobei der inerte Füllstoff eine Polyolefinfaser, Aramidfaser, Kohlefaser, keramische Whiskerfaser, Nylonfaser, oder eine Polyesterfaser ist.

2. Zusammensetzung nach Anspruch 1, wobei der Füllstoff eine Aramidfaser, Graphitfaser oder Nylonfaser ist.

3. Zusammensetzung nach Anspruch 1, wobei das scherverdickende Fluid Partikel enthält, die in einem Suspensionsmedium suspendiert sind, und die Partikel Oxide, Calciumcarbonat, synthetisch vorkommende Mineralien, natürlich vorkommende Mineralien, Polymere oder eine Mischung davon sind.

4. Zusammensetzung nach Anspruch 3, wobei das Suspensionsmedium Wasser ist, welches optional hinzugefügte Salze, Tenside, Nanopartikel oder Polymere oder Mischungen davon enthält.

5. Zusammensetzung nach Anspruch 3, wobei das Suspensionsmedium Ethylenglykol, Polyethylenglykol, Ethanol, Silikonöle, Kohlenwasserstoffverbindungen, fluorierte Lösemittel, Phenyltrimethicon oder eine Mischung davon ist.

6. Material zum Ableiten der kinetischen Energie eines sich bewegenden Gegenstands, umfassend die Zusammensetzung nach Anspruch 1, welche auf ein Material angewendet ist.

7. Material nach Anspruch 6, wobei das Material eine Laminatstruktur, Wabenstruktur, ein Vliesstoff, ein Schaumstoff, eine Kapsel, ein Ballon oder eine verkapselte Struktur ist.

8. Material zum Ableiten der kinetischen Energie eines sich bewegenden Gegenstands, umfassend ein Vliesmaterial, das mit der Zusammensetzung nach Anspruch 1 imprägniert ist oder diese als Zwischengewebe umfasst, wobei die Zusammensetzung eine fließfähige Form nach der Imprägnierung oder Interkalation beibehält.

9. Material nach Anspruch 8, wobei das scherverdickende Fluid Partikel enthält, die in einem Suspensionsmedium suspendiert sind, und die Partikel Oxide, Calciumcarbonat, synthetisch vorkommende Mineralien, natürlich vorkommende Mineralien, Polymere oder eine Mischung davon sind.

10. Material nach Anspruch 9, wobei das Suspensionsmedium Wasser ist, welches optional hinzugefügte Salze, Tenside, und/oder Polymere enthält.

11. Material nach Anspruch 9, wobei das scherverdickende Fluid Partikel enthält, die in einem Suspensionsmedium suspendiert sind, und die Partikel Oxide, Calciumcarbonat, synthetisch vorkommende Mineralien, natürlich vorkommende Mineralien, Polymere oder eine Mischung davon sind.

12. Material nach Anspruch 11, wobei das Suspensionsmedium Ethylenglykol, Polyethylenglykol, Ethanol, Silikonöle, Phenyltrimethicon oder eine Mischung davon ist und das Material ein Poly-(Para-Phenylen-Terephthalamid) ist.

13. Material nach Anspruch 12, wobei die Partikel Oxide, Calciumcarbonat, synthetisch vorkommende Mineralien, natürlich vorkommende Mineralien oder Polymere oder eine Mischung davon sind.

14. Material nach Anspruch 13, wobei die Partikel SiO₂, Polystyrol oder Polymethylmethacrylat sind.

15. Material nach Anspruch 11, wobei das Suspensionsmedium Ethylenglykol, Polyethylenglykol, Ethanol, ein Silikonöl, Phenyltrimethicon oder eine Mischung davon ist.

16. Material nach Anspruch 15, wobei die Partikel ein Durchschnittsdurchmesser von weniger als 1 mm aufweisen.

17. Material nach Anspruch 15, wobei die Partikel ein Durchschnittsdurchmesser von weniger als 100 µm aufweisen.

18. Material nach Anspruch 11, wobei das Material eine oder mehrere Schichten des Materials umfasst und die mindestens eine Schicht ein Webstoff ist.

19. Material nach Anspruch 11, wobei das Material eine oder mehrere Schichten des Materials umfasst und die mindestens eine Schicht ein Vliesstoff ist.

20. Material nach Anspruch 11, wobei das Material eine oder mehrere Schichten des Materials umfasst und die mindestens eine Schicht ein Gewirke ist.

21. Material nach Anspruch 11, wobei mindestens ein Teil der Polymerfasern aus Poly-(Para-Phenylen-Terephthalamid) gebildet ist.

22. Schützende Barriere aus Fasermaterial, umfassend ein Material mit einer Vielzahl von Polymerfasern mit hoher Zähigkeit, die in eine Gewebestruktur gebildet sind, wobei mindestens ein Teil der Fasern die Zusammensetzung nach Anspruch 1 als Zwischengewebe aufweist, wobei das schwerverdickende Fluid eine fließfähige Form nach der Interkalation beibehält.

23. Schützende Barriere nach Anspruch 22, wobei mindestens ein Teil der Polymerfasern aus Poly-(Para-Phenylen-Terephthalamid) gebildet ist.

24. Schützende Barriere nach Anspruch 23, wobei die schützende Barriere (eine) verstaubare Fahrzeugpanzerung, Zelte, Sitze, Cockpits, Splitterschutz ist, die zur Aufbewahrung und Transport von Gepäck, zur Aufbewahrung und Transport von Munitionen verwendet werden.

25. Körperpanzerung, umfassend das Material nach Anspruch 6.

26. Airbag, umfassend das Material nach Anspruch 6.

27. Bombendecke, umfassend das Material nach Anspruch 6.

28. Schutzkleidung zum Schutz gegen Fragmentierung bei Tätigkeiten wie Bombenentschärfung und Minenräumen, umfassend das Material nach Anspruch 9.

29. Panzerschürze, umfassend das Material nach Anspruch 6.

30. Verfahren zur Herstellung der Zusammensetzung nach Anspruch 1, umfassend das Suspendieren von Partikeln in einem Suspensionsmedium, um ein scherverdickendes Fluid zu bilden, und das Vermischen eines inerten Füllstoffs in das scherverdickende Fluid,
wobei der mindestens eine inerte Füllstoff in der Zusammensetzung in einer Menge im Bereich von 0,01 Gew.-% bis 50 Gew.-% vorhanden ist,
wobei der inerte Füllstoff eine Polyolefinfaser, Aramidfaser, Kohlefaser, keramische Whiskerfaser, Nylonfaser, oder eine Polyesterfaser ist.

31. Reifen, umfassend das Material nach Anspruch 6.

32. Industrielle Schutzkleidung, umfassend das Material nach Anspruch 6.

33. Industrielle Schutzmaterialien und/oder Einlagen für aufnehmende Ausrüstung oder für Verfahren , die Fragmentierung oder Projektile erzeugen können, umfassend das Material nach Anspruch 6.

34. Schutzkleidung und Ausrüstung für Sport- und Freizeitaktivitäten, umfassend das Material nach Anspruch 6.

35. Material nach Anspruch 6, wobei das Material in Gurten und Schläuchen für Industrie- und Kraftfahrzeuganwendungen verwendet wird,
Glasfaser- und elektromechanische Kabel,
Reibbeläge (wie beispielsweise Kupplungsscheiben und Bremsbeläge),
Dichtungen für hohe Temperaturen und Druckanwendungen,
Kleb- und Dichtstoffe,
Feuerfeste Kleidung,
Verbundstoffe,
Asbest-Ersatz,
Heißluft-Filtrationsgewebe,
mechanische Gummiwarenverstärkung,
Seile und Kabel,
Helminneres, Fechtbekleidung,
Motorrad-Schutzkleidung,
Stiefel,
Schaltknüppelabdeckungen,
Beinschützer,
Hosen
Handschuhe oder
Segel-Tuch.

36. Material nach Anspruch 8, wobei der inerte Füllstoff eine feste Faser mit hoher Druckfestigkeit ist.

37. Material nach Anspruch 8, wobei der inerte Füllstoff eine feste Faser mit hoher Zugfestigkeit ist.

38. Material nach Anspruch 37, weiterhin umfassend eine Faser mit hoher Druckfestigkeit, die in das scherverdickende Fluid vermischt ist.

39. Material nach Anspruch 6, 8, 22, 25-29, und 31-34, wobei das Material eine gießbare Form während der Anwendung beibehält.

## Revendications

1. Composition qui comprend un mélange d'un fluide d'épaississement par cisaillement, dont la viscosité croît avec le taux de déformation et comprend des particules suspendues dans un milieu de suspension dans la forme d'un liquide coulant et au moins une charge inerte,
- où ladite composition reste dans une forme conformable et est capable de prendre la forme des objets avec lesquels elle est placée en contact,
- où la, au moins une charge inerte est présente dans la composition dans une quantité allant de 0,01% en poids à 50% en poids,
- où ladite charge inerte est une fibre de polyoléfine, fibre d'aramide, fibre de carbone, fibre de céramique, fibre de nylon, ou une fibre de polyester.

2. Composition selon la revendication 1, où ladite charge est une fibre d'aramide, fibre de graphite, fibre de nylon.

3. Composition selon la revendication 1, où ledit fluide d'épaississement par cisaillement comprend les particules suspendues dans un milieu de suspension et lesdites particules sont des oxydes, carbonate de calcium, minéraux produits par voie synthétique, minéraux produits par voie naturelle, polymères ou mélange de ceux-ci.

4. Composition selon la revendication 3, où ledit milieu de suspension est l'eau qui contient optionnellement addition de sels, surfactants, nanoparticules ou polymères ou mélange de ceux-ci.

5. Composition selon la revendication 3, où ledit milieu de suspension est d'éthylène glycol, polyéthylène glycol, éthanol, huiles de silicium, hydrocarbures, solvants fluorés, phényltriméthicone ou un mélange de ceux-ci.

6. Matériau pour dissiper l'énergie cinétique d'un objet mobile comprenant la composition selon la revendication 1 étant appliquée à un matériau.

7. Matériau selon la revendication 6 où le matériau est une structure stratifiée, structure en nid d'abeilles, produit non tissé, une mousse, une capsule, un ballon ou une structure encapsulée.

8. Matériau pour dissiper l'énergie cinétique d'un objet mobile comprenant un matériau non tissé qui est imprégné ou intercalé dans la composition selon la revendication 1 où la composition reste dans une forme coulante après l'imprégnation ou intercalation.

9. Matériau selon la revendication 8, où ledit fluide d'épaississement par cisaillement, comprend les particules suspendues dans un milieu de suspension et lesdites particules sont des oxydes, carbonate de calcium, minéraux produits par voie synthétique, minéraux produits par voie naturelle, polymères ou mélange de ceux-ci.

10. Matériau selon la revendication 9, où ledit milieu de suspension est l'eau qui contient optionnellement addition de sels, surfactants, et/ou polymères.

11. Matériau selon la revendication 9, où ledit fluide d'épaississement par cisaillement, comprend lesdites particules suspendues dans un milieu de suspension et lesdites particules sont des oxydes, carbonate de calcium, minéraux produits par voie synthétique, minéraux produits par voie naturelle, polymères ou un mélange de ceux-ci.

12. Matériau selon la revendication 11, où ledit milieu de suspension est d'éthylène glycol, polyéthylène glycol, éthanol, huiles de silicium, phényltriméthicone ou un mélange de ceux-ci, et ledit matériau est un poly (para-phénylène téréphtalamide).

13. Matériau selon la revendication 12, où lesdites particules sont des oxydes, carbonate de calcium, minéraux produits par voie synthétique, minéraux produits par voie naturelle, ou polymères ou un mélange de ceux-ci.

14. Matériau selon la revendication 13, où lesdites particules sont de SiO₂, polystyrène ou polyméthylméthacrylate.

15. Matériau selon la revendication 11, où ledit milieu de suspension est d'éthylène glycol, polyéthylène glycol, éthanol, huile de silicium ou phényltriméthicone ou mélanges de ceux-ci.

16. Matériau selon la revendication 15, où lesdites particules ont un diamètre moyen de moins de 1 mm.

17. Matériau selon la revendication 15, où lesdites particules ont un diamètre moyen de moins de 100 microns.

18. Matériau selon la revendication 11, où le matériau comprend une ou plusieurs couches dudit matériau et ledit à une ou plusieurs couches est un produit tissé.

19. Matériau selon la revendication 11, où le matériau comprend une ou plusieurs couches dudit matériau et ledit à une ou plusieurs couches est un produit non tissé.

20. Matériau selon la revendication 11, où le matériau comprend une ou plusieurs couches dudit matériau et ledit à une ou plusieurs couches est un produit tricoté.

21. Matériau selon la revendication 11, où au moins une portion desdites fibres de polymère est formée de poly(para-phénylène téréphtalamide).

22. Barrière de protection d'un matériau de fibres comprenant un matériau ayant une pluralité de fibres de polymère de haute ténacité formées dans une structure de tissu où au moins une portion desdites fibres est intercalée avec la composition selon la revendication 1 où le fluide d'épaississement par cisaillement reste dans une forme coulante après intercalation.

23. Barrière de protection selon la revendication 22, où au moins une portion desdites fibres de polymère est formée de poly(para-phénylène téréphtalamide).

24. Barrière de protection selon la revendication 23, où la barrière de protection est armure de véhicule démontable, tentes, sièges, cockpits, revêtement contre les éclats, utilisés dans le stockage et le transport de bagages, utilisés dans le stockage et le transport de munitions.

25. Armure de corps comprenant le matériau selon la revendication 6.

26. Coussin gonflable comprenant le matériau selon la revendication 6.

27. Couverture contre la bombe comprenant le matériau selon la revendication 6.

28. Vêtement de protection pour protection de fragmentation pendant les activités comme le désamorçage de la bombe et le déminage comprenant le matériau selon la revendication 9.

29. Jupe de réservoir comprenant le matériau selon la revendication 6.

30. Procédé de production la composition selon la revendication 1, qui comprend les particules en suspension dans un milieu de suspension pour former un fluide d'épaississement par cisaillement et en mélangeant une charge inerte dans ledit fluide d'épaississement par cisaillement,
- où au moins une charge inerte est présente dans la composition dans une quantité allant de 0,01% en poids à 50% en poids,
- où ladite charge inerte est une fibre de polyoléfine, fibre d'aramide, fibre de carbone, fibre de céramique, fibre de nylon, ou une fibre de polyester.

31. Pneu comprenant le matériau tel que défini dans la revendication 6.

32. Vêtement de protection industriel comprenant le matériau tel que défini dans la revendication 6.

33. Matériaux industriels de protection et/ou revêtements pour comprendre l'équipement ou les procès qui pourraient produire la fragmentation ou des projectiles, comprenant le matériau tel que défini dans la revendication 6.

34. Vêtement de protection et équipement pour les activités de sport et de loisir comprenant le matériau tel que défini dans la revendication 6.

35. Matériau tel que défini dans la revendication 6, où le matériau est utilisé dans les ceintures et les tubes flexibles pour les applications industrielles et automobiles:
- fibre optique et câbles électromécaniques,
- garnitures de friction (telles que disques d'embrayage et plaques de frein),
- garnitures d'étanchéité pour applications à haute température et pression,
- adhésifs et produits d'étanchéité,
- vêtement résistant à la flamme
- composites,
- remplacement d'asbeste,
- tissus de filtration d'air chaud,
- produits de renforcement mécanique du caoutchouc:
- cordes et câbles
- casques de protection d'intérieur,
- vêtement d'escrime,
- vêtement de protection pour motocyclette:
- bottes,
- guêtres
- jambières en cuir,
- pantalons gants ou vêtement de toile

36. Matériau tel que défini dans la revendication 8, où ladite charge inerte est une fibre à haute résistance à compression.

37. Matériau tel que défini dans la revendication 8, où ladite charge inerte est une fibre à haute résistance à traction.

38. Matériau tel que défini dans la revendication 37 qui comprend de plus une fibre à haute résistance à compression mélangée dans le fluide d'épaississement par cisaillement.

39. Matériau tel que défini dans l'une quelconque des revendications 6, 8, 22, 25-29, et 31-34 où ledit matériau reste dans une forme coulante pendant l'application.
